# EUROPÄISCHE PATENTSCHRIFT

(11) **EP 3 228 168 B1**
(45) Veröffentlichungstag und Bekanntmachung des Hinweises auf die Patenterteilung: **29.01.2020**
(21) Anmeldenummer: 17401029.8
(22) Anmeldetag: 31.03.2017
(51) Int. Cl.: A01C 7/20, A01C 7/08

(54) **SAATGUTLEITUNG FÜR EINE SÄMASCHINE**
SEED TUBE FOR A SOWING MACHINE
CONDUITE À SEMENCE POUR UN SEMOIR

(30) Priorität: 05.04.2016 DE 102016106143; 01.12.2016 DE 102016123196
(43) Veröffentlichungstag der Anmeldung: 11.10.2017
(73) Patentinhaber: Amazonen-Werke H. Dreyer GmbH & Co. KG, 49205 Hasbergen (DE)
(72) Erfinder: Mertens, Daniel, 26121 Oldenburg (DE); Wien, Thomas, 28816 Stuhr (DE); Bohlen, Eike, 28215 Bremen (DE); Westermann, Andre, 27777 Ganderkesee (DE)

(56) Entgegenhaltungen:
- EP-A1- 1 262 705
- DE-C- 826 523
- DE-T2- 60 310 281
- US-A- 675 450
- US-A- 2 428 679
- US-A- 3 099 373

## Beschreibung

Die Erfindung betrifft eine Saatgutleitung für eine Sämaschine gemäß des Oberbegriffes des Patentanspruches 1 und wie bekannt aus DE 826 523 C.

Eine derartige Saatgutleitung für eine Sämaschine ist in der Praxis bekannt. Diese Saatleitung ist mittels einer mutterartigen Klemmverbindung oder einer bajonettartigen Verbindung an der Dosiervorrichtung befestigt. Hier findet also eine formschlüssige und durch Verdrehung gesicherte, werkzeugartige Verbindung der Saatgutleitung mit der Dosiervorrichtung Verwendung. Die durch Verdrehung von Bauteilen der mutterartigen Klemmverbindung oder einer bajonettartigen Verbindung geschaffene werkzeugartige Verbindung mit verdrehbaren Verriegelungselementen kann besonders nach längerem Gebrauch reiben oder schwergängig werden, welches dann zwangsläufig den Einsatz von Werkzeug zum Lösen des Verbindungselementes verlangt.

Der Erfindung liegt die Aufgabe zugrunde, ein vereinfachtes und leichtes Trennen der Saatgutleitung im Bereich der Dosiervorrichtung ohne den Einsatz von verdrehbaren Verriegelungselementen zu schaffen.

Diese Aufgabe wird erfindungsgemäß mit einer Saatgutleitung nach Anspruch 1 gelöst.

Infolge dieser Maßnahmen wird zunächst auf das Verdrehen der Verriegelungselemente verzichtet. Hierdurch lässt sich die Saatgutleitung an der vorgesehenen Trennstelle in einfacher Weise öffnen. Die herausnehmbare Zwischenleitung wird durch das Federelement in seine Verbindungs- und Schließstellung gehalten. Weiterhin wird ein sicherer Halt und Zentrierung der Zwischenleitung in der Saatgutleitung durch die konusartig ausgebildeten Vater- und Mutterteile in Verbindung mit dem Federelement gewährleistet. Gleichzeitig ergibt sich eine gute Abdichtung der Zwischenleitung zu dem übrigen Bereich der Saatgutleitung.

Ein einfacher Halt der Zwischenleitung in der Saatgutleitung sowie die Möglichkeit einer einfachen Demontage und Herausnahme der Zwischenleitung an der Trennstelle der Saatgutleitung wird dadurch gewährleistet, dass die konusartig ausgestalteten Verbindungselemente ausschließlich durch das Federelement in Verbindungs- und Schließstellung gehalten werden.

Eine vorteilhafte Zuordnung des Federelemente zu der Zwischenleitung wird dadurch erreicht, dass das Federelement der Zwischenleitung zugeordnet und auf der der Saatgutleitung zugewandten Seite konisch ausgebildet ist.

Um das Federelement in einfacher Weise der Zwischenleitung zuordnen zu können, ist vorgesehen, dass das Federelement rohrförmig ausgebildet ist und die Zwischenleitung umschließt.

Eine einfache Ausbildung des Federelementes lässt sich dadurch erreichen, dass das Federelement als Gummifeder, Schaumstoffelement und/oder gummifederartiges Rohrelement ausgebildet ist.

Um beispielsweise Verstopfungen in der Saatgutleitung in einfacher Weise beseitigen zu können, ist vorgesehen, dass die Zwischenleitung in der Saatgutleitung herausnehmbar angeordnet ist.

Weitere Einzelheiten der Erfindung sind der Beispielsbeschreibung und den Zeichnungen zu entnehmen. Die Zeichnungen zeigen
- Fig.1: ein Einzelkornsäaggregat einer als Einzelkornsämaschine ausgebildten Sämaschine in Prinzipdarstellung und in Seitenansicht, wobei die Saatgutleitung einer nicht erfindungsgemäßen Ausführungsform an einer Trennstelle geschlossen ist,
- Fig.2: der in einem größeren Maßstab dargestellte zu trennende Saatleitungsbereich nach Fig.1 in Seitenansicht,
- Fig.3: das Einzelkornsäaggregat in der gleichen Darstellungsweise wie Fig.1, wobei jedoch die Saatgutleitung an der Trennstelle geöffnet ist,
- Fig.4: der in einem größeren Maßstab dargestellte zu trennende Saatleitungsbereich nach Fig.3 in Seitenansicht

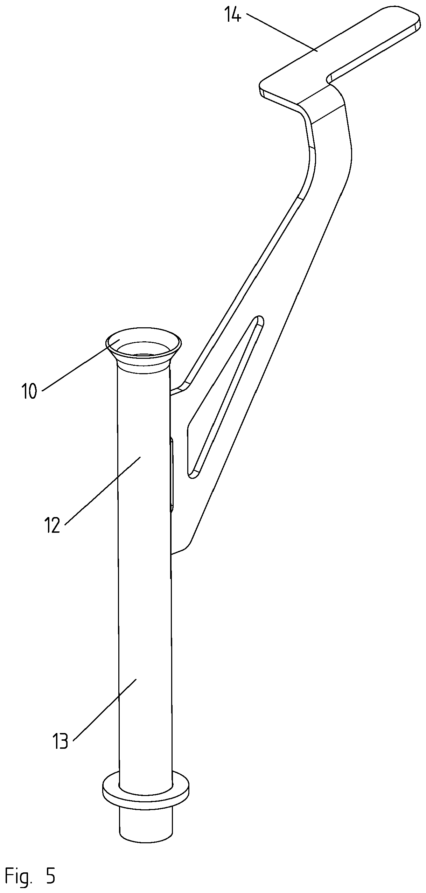

- Fig.5: der herausnehmbar gestaltete trennbare Teil der Saatgutleitung in vergrößertem Maßstab und in perspektivischer Darstellung, nach einer nicht erfindungsgemäßen Ausführungsform,
- Fig.6: ein weiteres Einzelkornsäaggregat einer als Einzelkornsämaschine ausgebildeten Sämaschine in Prinzipdarstellung und in Seitenansicht, wobei die erfindungsgemäße Saatgutleitung an der Trennstelle geschlossen ist,
- Fig.7: der in einem größeren Maßstab dargestellte zu trennende Saatleitungsbereich nach Fig.6 in Seitenansicht,
- Fig.8: das Einzelkornsäaggregat in der gleichen Darstellungsweise wie Fig.6, wobei jedoch die Saatgutleitung an der Trennstelle geöffnet ist,
- Fig.9: der in einem größeren Maßstab dargestellte zu trennende Saatleitungsbereich nach Fig.7 in perspektivischer Darstellung,
- Fig.10: der in einem größeren Maßstab dargestellte zu trennende Saatleitungsbereich nach Fig.9 in Seitenansicht und
- Fig.11: die erfindungsgemäße Saatgutleitung mit dem herausnehmbar gestalteten trennbaren Teil der Saatgutleitung im Schnitt A - A.

Das Einzelkornsäaggregat 1 weist einen Rahmen 2 auf, der in bekannter und daher nicht dargestellter Weise an einem Querbalken der als Einzelkornsämaschine ausgebildete Sämaschine zu befestigen ist. In bekannter Weise sind mehrere Einzelkornsäaggregate 1 beabstandet nebeneinander an dem Querbalken angeordnet. An dem Rahmen 2 des Einzelkornsäaggregates 1 ist die Schareinheit 3, die Vereinzelungsvorrichtung 4 und der Saatgutbehälter 5 angeordnet. Zwischen der Vereinzelungsvorrichtung 4 und der als Schareinheit 3 ausgebildeten Abgabe- und/oder Ablageeinrichtung ist die trennbar ausgebildete Saatgutleitung 6 angeordnet. Die Saatgutleitung 6 weist die Trennstelle 7 mit dem werkzeuglos zu öffnenden und wieder zu verschließenden Verbindungselement 8 auf.

Das Verbindungselement 8 weist das miteinander zusammenwirkende konusartige Vaterteil 9 und das konusartige Mutterteil 10 auf. Unterhalb von dem Verbindungselement 8 ist in der Saatgutleitung 6 das rohrförmig ausgebildete Federelement 11 angeordnet. Dieses Federelement 11 ist als Gummifeder und gummifederartiges Rohrelement ausgebildet und bildet einen Teil der Saatgutleitung 6. Im oberen Bereich 12 des unteren Teiles 13 der trennbaren Saatgutleitung 6 ist das als Handhebel ausgebildete Handbetätigungselement 14 angeordnet. Im Ausführungsbeispiel befindet sich das konusartige Vaterteil 9 des Verbindungselementes 8 am unteren Ende des oberen trennbaren Teiles der Saatgutleitung 6, während das Mutterteil 10 des Verbindungselementes 8 am oberen Ende des trennbaren Teiles der Saatgutleitung 6 befindet. Das trennbare Teil 13 der Saatgutleitung 6 kann herausnehmbar in der Saatgutleitung 6 angeordnet sein.

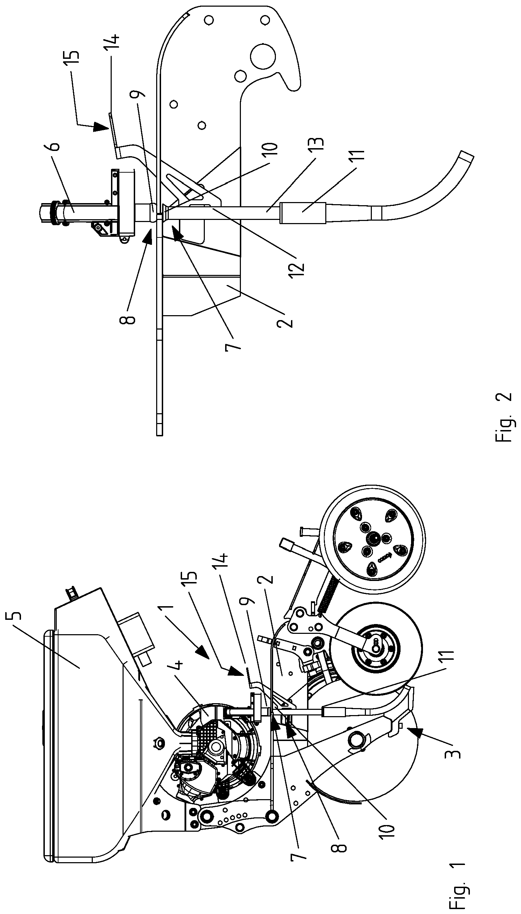

Das Federelement 11 weist in geschlossener Position der Saatgutleitung 6, wie in den Fig. 1 und 2 dargestellt, eine Vorspannung auf, so dass das Federelement 11 das trennbare Teil 13 der Saatgutleitung 6 in Richtung des Verbindungselementes 8 drückt. Somit wird ausschließlich durch die Vorspannung des Federelementes 11 das Verbindungselement 8 der Saatgutleitung 6 in Schließposition gehalten.

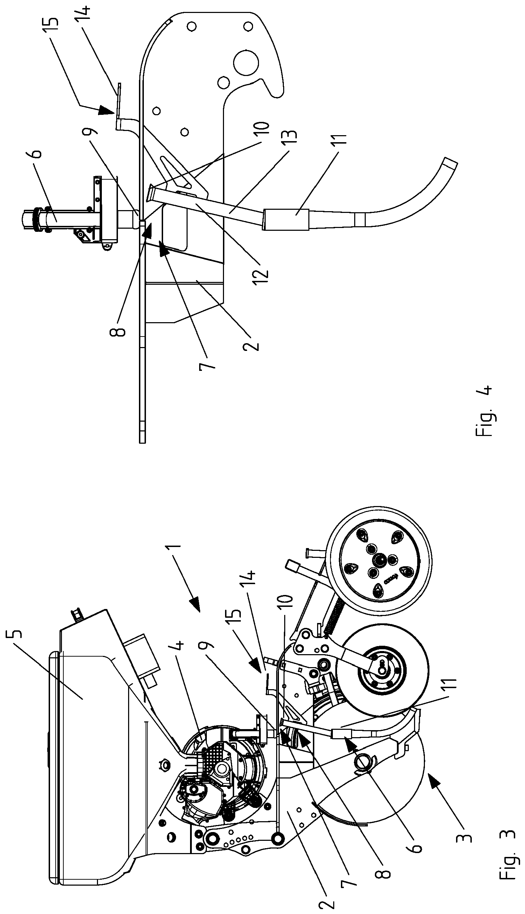

Die Funktionsweise, um die Saatgutleitung 6 einerseits aus der Verbindungs- bzw. Schließstellung und in die Öffnungsstellung und andererseits umgedreht zu bringen, ist folgende:
Wenn zum Beispiel aufgrund einer Verstopfung der Saatgutleitung 6 oder zur Reinigung der Saatgutleitung 6 die Saatgutleitung 6 im Bereich der Trennstelle 7 geöffnet werden muss, so kann alleine durch das Drücken auf das Handbetätigungselement 14 in Pfeilrichtung 15 der trennbare Teil 13 der Saatgutleitung 6 werkzeuglos nach unten gedrückt werden, umso das Verbindungselement 8 zu öffnen, den trennbaren Teil 13 der Saatgutleitung 6 zur Seite zu schwenken, wie dies die Fig.3 und 4 zeigen. Auch ist, wenn die Stelle im Bereich des Federelementes 11 so ausgestaltet ist, der trennbare Teil 13 der Saatgutleitung 6 ganz herauszunehmen.

Wenn die Verstopfung der Saatgutleitung 6 beseitigt oder diese gereinigt ist, so lässt sich das trennbare Teil 13 der Saatgutleitung 6 wieder in seine geschlossene Position verschwenken. Wenn das trennbare Teil 13 der Saatgutleitung 6 soweit verschwenkt ist, dass sich das Mutterteil 10 in der Nähe des Vaterteiles 9 befindet, wird durch Drücken auf das Handbetätigungselement 14 in Pfeilrichtung 15 der trennbare Teil 13 der Saatgutleitung 6 nach unten gedrückt und weiter soweit verschwenkt, bis sich das Mutterteil 10 direkt unterhalb des Vaterteiles 9 befindet. In dieser Position wird die Druckkraft von dem Handbetätigungselement 14 weggenommen, so dass das Vaterteil 9 in das Mutterteil 10 ein schnappt. Allein hierdurch wird die Verbindung der Saatgutleitung 6 im Bereich des Verbindungselementes 8 wiederhergestellt.

Somit kann durch die erfindungsgemäße Ausgestaltung auf ein zusätzliches bajonett- oder schraubenartiges Verriegelungselement im Bereich der Verbindungsstelle 7 verzichtet werden.

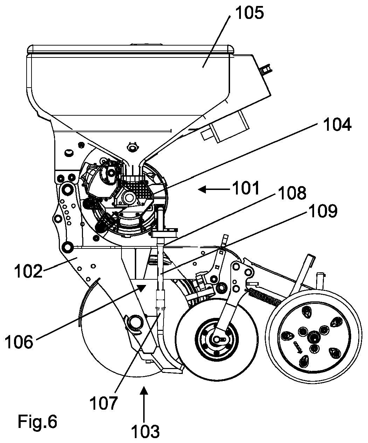

Das Einzelkornsäaggregat 101 gemäß Fig. 6 weist einen Rahmen 102 auf, der in bekannter und daher nicht dargestellter Weise an einem Querbalken der als Einzelkornsämaschine ausgebildeten Sämaschine zu befestigen ist. In bekannter Weise sind mehrere Einzelkornsäaggregate 101 beabstandet nebeneinander an einem nicht dargestellten Querbalken angeordnet. An dem Rahmen 102 des Einzelkornsäaggregates 101 ist die Schareinheit 103, die Vereinzelungsvorrichtung 104 und der Saatgutbehälter 105 angeordnet. Zwischen der Vereinzelungsvorrichtung 104 und der als Schareinheit 103 ausgebildeten Abgabe- und/oder Ablageeinrichtung ist die trennbar ausgebildete Saatgutleitung 106 angeordnet. Die Saatgutleitung 106 weist die beiden Trennstellen 107 und 108 mit der dazwischen einzusetzenden und entfernbaren Zwischenleitung 109 auf.

Die Zwischenleitung 109 und die Saatgutleitung 106 weisen im Bereich der Trennstellen 107 und 108 miteinander zusammenwirkende konusartige Vaterteile 110 und Mutterteile 111 auf. Im Bereich der unteren Trennstelle 107 ist in der Saatgutleitung 106 das rohrförmig ausgebildete Federelement 120 angeordnet. Dieses Federelement 120 ist als Gummifeder und gummifederartiges Rohrelement ausgebildet und umschließt die Zwischenleitung 109 in deren unterem Bereich. Das Federelement 120 kann auch als Schaumstoffelement ausgebildet sein.

Somit ist die Saatgutleitung 106 über die beiden Trennstellen 107 und 108 in einen ersten und einen zweiten Bereich teilt. Zwischen den zwei Trennstellen 107 und 108 der Saatgutleitung 106 ist die Zwischenleitung 109 der Saatgutleitung 106, die den ersten und zweiten Bereich der Saatgutleitung 106 überbrückend verbindet, angeordnet ist. Die Trennstellen 107 und 108 sind, wie vor beschrieben, werkzeuglos zu öffnende und wieder zu verschließende, als konusartig zusammenwirkende Vater- 110 und Mutterteile 111 ausgebildet. Der unteren Trennstelle 7 und den als Vater- 110 und Mutterteile 111 ausgebildeten Verbindungselementen zwischen der Saatgutleitung 106 und der Zwischenleitung 109 ist das in Verbindungs- und Schließstellung haltende Federelement 120 zugeordnet.

Hierdurch lässt sich die Saatgutleitung 106 an den vorgesehenen Trendstellen 107 und 108 in einfacher Weise öffnen, indem die Zwischenleitung 109 herauszunehmen ist. Über das Federelement 120 wird das Zwischenelement 109 in seiner Verbindungs- und Schließstellung gehalten. Weiterhin wird ein sicherer Halt und Zentrierung der Zwischenleitung 109 in der Saatgutleitung 106 durch die konusartig ausgebildeten und zusammenwirkenden Vater- 110 und Mutterteile 110 in Verbindung mit dem Federelement 120 gewährleistet. Gleichzeitig ergibt sich eine gute Abdichtung der Zwischenleitung 109 zu dem übrigen Bereichen der Saatgutleitung 106.

So ist auch ein einfacher Halt der Zwischenleitung 109 in der Saatgutleitung 106 sowie die Möglichkeit einer einfachen Demontage und Herausnahme der Zwischenleitung 109 an den Trennstellen 107 und 108 der Saatgutleitung 106 gewährleistet. Hierbei halten die konusartig ausgestalteten Verbindungselemente 110 und 111 ausschließlich durch das Federelement 120 die Zwischenleitung 109 in der Saatgutleitung 106 in Verbindungs- und Schließstellung.

Das Federelement 120 ist der Zwischenleitung 109 zugeordnet und auf der der Saatgutleitung 106 zugewandten Seite konisch ausgebildet. Hierdurch ergibt sich vorteilhafte Zuordnung des Federelementes 120 mit einer guten Abdichtung zwischen der Zwischenleitung 109 und der Saautgutleitung 106 in dem Bereich der Trennstellen 107 und 108.

Um beispielsweise Verstopfungen in der Saatgutleitung 106 in einfacher Weise zu beseitigen lässt sich die Zwischenleitung 109 aus der Saatgutleitung 106 herausnehmen.

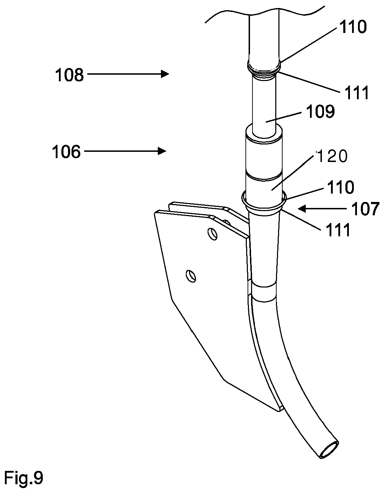

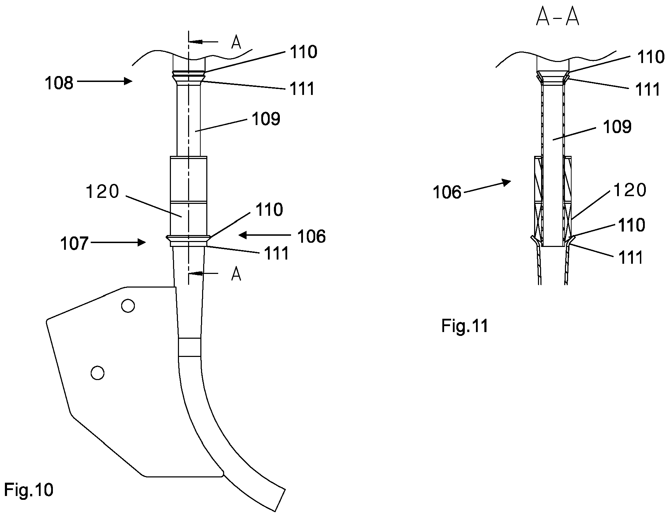

Das Federelement 120 weist in geschlossener Position der Saatgutleitung 6, wie in den Fig. 6, 7, und 9 bis 11 dargestellt, eine Vorspannung auf, so dass das Federelement 120 das trennbare Teil 109 der Saatgutleitung 106 zwischen den Trennstellen 107 und 108 der Saatgutleitung hält. Somit wird ausschließlich durch die Vorspannung des Federelementes 120 das Verbindungselement 109 der Saatgutleitung 106 in Schließposition gehalten.

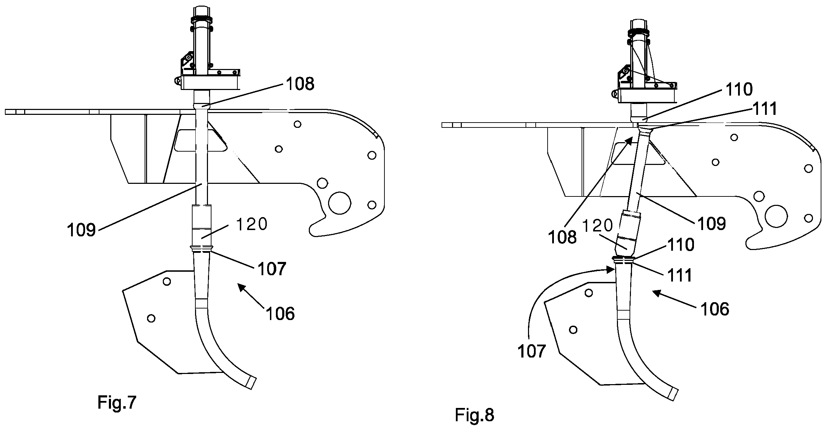

Die Funktionsweise, um die Zwischenleitung 109 der Saatgutleitung 106 einerseits aus der Verbindungs- bzw. Schließstellung und in die Öffnungsstellung und andererseits umgedreht zu bringen, ist folgende:
Wenn zum Beispiel aufgrund einer Verstopfung der Saatgutleitung 106 oder zur Reinigung der Saatgutleitung 6 die Saatgutleitung 106 im Bereich der Trennstellen 107 und 108 geöffnet werden muss, so kann erfindungsgemäß alleine durch das Drücken der Zwischenleitung 109 nach unten gegen die Federkraft des Federelementes 120 die Saatgutleitung 106 werkzeuglos nach unten gedrückt werden, um die Saatgutleitung 106 zu öffnen, die heraustrennbare Zwischenleitung 109 der Saatgutleitung 106 zur Seite zu schwenken, wie dies die Fig.8 zeigt, und anschließend heraus zu nehmen.

Wenn die Verstopfung der Saatgutleitung 106 beseitigt oder diese gereinigt ist, so lässt sich die Zwischenleitung 109 der Saatgutleitung 106 wieder in seine geschlossene Position zwischen den Trennstellen 107 und 108 wieder einsetzen, so dass die Verbindung der Saatgutleitung 106 im Bereich zwischen den Trennstellen 107 und 108 wiederhergestellt ist.

Somit kann durch die erfindungsgemäße Ausgestaltung auf ein zusätzliches bajonett- oder schraubenartiges Verriegelungselement im Bereich der Zwischenleitung 109 im Bereich der Trennstellen 107 und 108 verzichtet werden.

## Patentansprüche

1. Saatgutleitung für eine Sämaschine, insbesondere Einzelkornsämaschine, zur Anordnung zwischen einer Dosiervorrichtung (104), wie einer Vereinzelungsvorrichtung, und einer Abgabe- und/oder Ablageeinrichtung (103), wobei die Saatgutleitung (106) zwei Trennstellen (107 und 108), die die Saatgutleitung (106) in einen ersten und einen zweiten Bereich teilen, aufweist, wobei zwischen den zwei Trennstellen (107 und 108) der Saatgutleitung (106) eine Zwischenleitung (109) der Saatgutleitung (106), die den ersten und zweiten Bereich der Saatgutleitung (106) überbrückend verbindet, angeordnet ist, und wobei den Trennstellen (107 und 108) werkzeuglos zu öffnende und wieder zu verschließende Verbindungselemente (110 und 111) zwischen den Bereichen der Saatgutleitung (106) und der Zwischenleitung (109) zugeordnet sind, **dadurch gekennzeichnet, dass** die Verbindungselemente (110 und 111) im Bereich der Trennstellen (107 und 108) als konusartig zusammenwirkende Vater- (110) und Mutterteile (111) ausgebildet sind und zumindest einem der Verbindungselemente (110 und 111) ein die Saatgutleitung (106) und die Zwischenleitung (109) in Verbindungs- und Schließstellung haltendes Federelement (120) derart zugeordnet ist, dass alleine durch das Drücken der Zwischenleitung (109) nach unten gegen die Federkraft des Federelementes (120) die Saatgutleitung (106) nach unten gedrückt werden kann, um die Saatgutleitung (106) zu öffnen sowie die Zwischenleitung (109) zur Seite zu schwenken und aus der Saatgutleitung (106) heraus zu nehmen.

2. Saatgutleitung (106) nach Anspruch 1, wobei die konusartig ausgestalteten Verbindungselemente (110 und 111) ausschließlich durch das Federelement (120) in Verbindungs- und Schließstellung gehalten werden.

3. Saatgutleitung (106) nach Anspruch 1 oder 2, wobei das Federelement (120) der Zwischenleitung (109) zugeordnet und auf der der Saatgutleitung (106) zugewandten Seite konisch ausgebildet ist.

4. Saatgutleitung (106) nach zumindest einem der vorstehenden Ansprüchen 1 bis 3, wobei das Federelement (120) rohrförmig ausgebildet ist und die Zwischenleitung (109) umschließt.

5. Saatgutleitung (106) nach zumindest einem der vorstehenden Ansprüchen 1 bis 4, wobei das Federelement (120) als Gummifeder, Schaumstoffelement und/oder gummifederartiges Rohrelement ausgebildet ist.

6. Saatgutleitung (106) nach zumindest einem der vorstehenden Ansprüchen 1 bis 5, wobei die Zwischenleitung (109) in der Saatgutleitung (106) herausnehmbar angeordnet ist.

7. Saatgutleitung (106) nach zumindest einem der vorstehenden Ansprüche, wobei die Zwischenleitung (109) durch die konusartig ausgebildeten Vater- und Mutterteile (110, 111) in Verbindung mit dem Federelement (120) in der Saatgutleitung gehalten und zentriert wird.

## Claims

1. Seed pipe for a seeder, in particular single-grain seeder, for arranging between a metering apparatus (104), such as a singulating apparatus, and a dispensing and/or depositing device (103), wherein the seed pipe (106) has two separating points (107 and 108) which divide the seed pipe (106) into a first and a second region, wherein an intermediate pipe (109) of the seed pipe (106) is arranged between the two separating points (107 and 108) of the seed pipe (106) and connects the first and second region of the seed pipe (106) in a bridging manner, and wherein the separating points (107 and 108) are assigned connecting elements (110 and 111), to be opened and closed again without a tool, between the regions of the seed pipe (106) and the intermediate pipe (109), **characterized in that** the connecting elements (110 and 111) are designed in the region of the separating points (107 and 108) as father parts (110) and mother parts (111) interacting in the manner of a cone, and at least one of the connecting elements (110 and 111) is assigned a spring element (120), which keeps the seed pipe (106) and the intermediate pipe (109) in the connecting and closed position, in such a manner that, solely by pressing the intermediate pipe (109) downwards counter to the spring force of the spring element (120), the seed pipe (106) can be pressed downwards in order to open the seed pipe (106) and to pivot the intermediate pipe (109) to the side and to remove the latter from the seed pipe (106).

2. Seed pipe (106) according to Claim 1, wherein the connecting elements (110 and 111) configured in the manner of a cone are kept in the connecting and closed position solely by means of the spring element (120).

3. Seed pipe (106) according to Claim 1 or 2, wherein the spring element (120) is assigned to the intermediate pipe (109) and is formed conically on the side facing the seed pipe (106).

4. Seed pipe (106) according to at least one of the preceding Claims 1 to 3, wherein the spring element (120) is of tubular design and surrounds the intermediate pipe (109).

5. Seed pipe (106) according to at least one of the preceding Claims 1 to 4, wherein the spring element (120) is designed as a rubber spring, foam element and/or tubular element in the manner of a rubber spring.

6. Seed pipe (106) according to at least one of the preceding Claims 1 to 5, wherein the intermediate pipe (109) is arranged removably in the seed pipe (106).

7. Seed pipe (106) according to at least one of the preceding claims, wherein the intermediate pipe (109) is held and centred in the seed pipe by the father and mother parts (110, 111), which are designed in the manner of a cone, in conjunction with the spring element (120).

## Revendications

1. Conduite à semence pour un semoir, en particulier un semoir à une seule graine, destinée à être disposée entre un dispositif de dosage (104), tel qu'un dispositif de séparation, et un dispositif de décharge et/ou de dépose (103), la conduite à semence (106) présentant deux points de séparation (107 et 108) qui divisent la conduite à semence (106) en une première et en une deuxième région, une conduite intermédiaire (109) de la conduite à semence (106), qui relie la première et la deuxième région de la conduite à semence (106) en les surmontant, étant disposée entre les deux points de séparation (107 et 108) de la conduite à semence (106) et des éléments de liaison (110 et 111), entre les régions de la conduite à semence (106) et la conduite intermédiaire (109), pouvant être ouverts et à nouveau refermés sans outil, étant associés aux points de séparation (107 et 108), **caractérisée en ce que** les éléments de liaison (110 et 111) dans la région des points de séparation (107 et 108) sont réalisés sous forme de pièces mâle (110) et femelle (111) coopérant à la manière d'un cône et un élément de ressort (120) retenant dans la position de liaison et de fermeture la conduite à semence (106) et la conduite intermédiaire (109) étant associé à au moins l'un des éléments de liaison (110 et 111) de telle sorte que simplement par la pression de la conduite intermédiaire (109) vers le bas à l'encontre de la force de ressort de l'élément de ressort (120), la conduite à semence (106) puisse être pressée vers le bas afin d'ouvrir la conduite à semence (106) et de faire pivoter la conduite intermédiaire (109) vers le côté et de la retirer de la conduite à semence (106).

2. Conduite à semence (106) selon la revendication 1, dans laquelle les éléments de liaison (110 et 111) configurés en forme de cône sont retenus exclusivement par l'élément de ressort (120) dans la position de liaison et de fermeture.

3. Conduite à semence (106) selon la revendication 1 ou 2, dans laquelle l'élément de ressort (120) est associé à la conduite intermédiaire (109) et est réalisé sous forme conique du côté tourné vers la conduite à semence (106).

4. Conduite à semence (106) selon au moins l'une quelconque des revendications précédentes 1 à 3, dans laquelle l'élément de ressort (120) est réalisé sous forme tubulaire et entoure la conduite intermédiaire (109).

5. Conduite à semence (106) selon au moins l'une quelconque des revendications précédentes 1 à 4, dans laquelle l'élément de ressort (120) est réalisé sous forme de ressort en caoutchouc, d'élément en mousse et/ou d'élément tubulaire de type ressort en caoutchouc.

6. Conduite à semence (106) selon au moins l'une quelconque des revendications précédentes 1 à 5, dans laquelle la conduite intermédiaire (109) est disposée dans la conduite à semence (106) de manière à pouvoir être retirée.

7. Conduite à semence (106) selon au moins l'une quelconque des revendications précédentes, dans laquelle la conduite intermédiaire (109) est retenue et centrée dans la conduite à semence par les pièces mâle et femelle (110, 111) réalisées sous forme de cône en association avec l'élément de ressort (120).
